# EUROPEAN PATENT APPLICATION

(11) **EP 2 451 060 A1**
(43) Date of publication of application: **09.05.2012**
(21) Application number: 09846889.5
(22) Date of filing: 08.12.2009
(51) Int. Cl.: H02K 17/18, H02K 3/12

(54) **METHOD FOR INCREASING THE OPERATING EFFICIENCY OF ASYNCHRONOUS SHORT-CIRCUITED ELECTRIC MACHINES, AND AN ASYNCHRONOUS SHORT-CIRCUITED ELECTRIC MACHINE (VARIANTS)**

(30) Priority: 30.06.2009 RU 2009124815
(71) Applicant: Joint Stock Company "Technology Smp", Moscow 107078 (RU)
(72) Inventor: BAYDASOV, Nikolay lvanovich, 36200 Alaniya Respublika Severnaya Osetiya (RU)
(74) Representative: Henrion, Oliver
(86) International application number: PCT/RU2009/000674
(87) International publication number: WO 2011/002334

(57) **Abstract**

The invention pertains to the field of power generation and can be used in electromechanical energy conversion systems, in particular in asynchronous short-circuited machines. The essence of the proposed invention is that the action of a rotating electromagnetic field of a stator on the short-circuited turns of a rotor winding extending through areas adjacent to the pole pitch limits of the stator is supplemented by the additional action of a rotating electromagnetic field of the stator on sections of the short-circuited turns of the rotor winding extending through areas adjacent to the limits of a half pole pitch of the stator. The present method and the machine variants based thereon make it possible to provide a machine in which the engine starting current ratio is lower by comparison with machines of the prior art because of the prevention of losses on the braking effect, which makes it possible to increase the starting frequency without load reduction and to use the machine in the most severe operating conditions with an increased load on the shaft, wherein the machine maintains the rotating field effect and can still be fully operational upon the disconnection of one phase, generating in the phase-disconnected winding a high-quality harmonic voltage for the missing phase.

## Description

The invention pertains to the field of power generation and can be used in the electromechanical energy conversion systems and, more particular, in the asynchronous short-circuited machines.

An "Asynchronous engine" of the prior art (German Patent 51083, Cl. H02K17/16, 1889) comprises a stator and a rotor with the "squirrel cage"-type winding having the plurality of conductor bars installed symmetrically in the slots around the rotor surface and short-circuited at their ends with the end rings, and the operating principle is based on the mutual magnetic coupling between the primary rotating electromagnetic field of the stator and the secondary electromagnetic field induced in the rotor.

The shortcomings of this machine design are low characteristics of engineering, power-producing, operational and technical-economic performance such as sub-optimal efficiency factor and power factor, large starting current, large idle current, small starting torque, drooping torque-speed characteristic and large rated slip. All above mentioned shortcomings are determined by the rapid change of resulting magnetic field of the machine and reduced module of the vector product of stator and rotor electromagnetic fields due to strong influence of the longitudinal component of the "rotor armature" response as well as low effectiveness of the resulting magnetic field generated in the machine by the conductor bars of the "squirrel cage" which electromotive forces are momentarily less than the electromotive forces of the bars located on the magnetic axis of the stator field due to inhibition of small electromotive forces by the maximum electromotive force.

In the art is known the "METHOD OF MAKING HIGH EFFICIENCY INDUCTION MOTOR WITH MULTI CAGE CIRCUIT ROTOR" (US Patent 4,095,332, Cl. H02K 17/12, 1978), comprising the stator and rotor having the plurality of conductor bars installed symmetrically in the slots around the rotor surface with end rings connecting these above mentioned bars in the uneven number of separate identical sets with the same principle of operation. This technical solution is used to reduce the action of the higher harmonic components of the line voltage supplied to the stator as the electromagnetic brake of the machine; however, this machine is handicapped by the small starting current that restricts is application only to drives with so-called "fan-type" characteristic having the small loading torque at the start.

The nearest equivalent to the technical essence of the subject of invention is the "INDUCTION ASYNCHRONOUS MOTOR" (RF Patent 2208892, Cl. H02K17/16, 2003) comprising a stator and a rotor having the conductor bars installed symmetrically in the slots around the rotor surface and parallel to the motor rotation axis, while the end of each bar at the end face of the rotor is connected will all ends of bars that are shifted in relation to this particular bar around the rotor perimeter by the value of the pole pitch angle. This technical solution embodies the method wherein "n" number of vectors of the magnetic fields of rotor and stator produce the resulting electromagnetic torque.

The disadvantages of this method are that in this technical solution the torque increases only in certain positions of rotor in relation to stator which results in the variation of the torque over the rotor rotation and does not produce the adequate increase of the starting torque. This restricts its application to the drives with so-called "fan type" characteristic having the small loading torque at the start which increases in quadratic dependence on the acceleration. The unevenness of the torque increase gives rise to knocks, noise and vibration during the machine operation, restricts its application only to flywheel drives and contributes to the excessive wear.

The essence of the method of invention is that the action of the rotating electromagnetic field of the stator on the short circuited turns of the rotor winding extending through areas adjacent to the pole pitch limits of the stator is supplemented by the additional action of the rotating electromagnetic field of the stator on the sections of the short-circuited turns of the rotor winding extending through areas adjacent to the half pole pitch limits of the stator.

The technical result of the method of invention and machine variants based on this method of invention is that in this machine as compared to the machine of prior art the motor reduces the starting current ratio by elimination of losses caused by braking effect which allows to increase the motor start-up frequency without load reduction and use the machine in most severe operational conditions under the increased shaft load. The machine maintains the rotating field effect and can still be fully operational upon one phase disconnection, generating in the phase disconnected winding a high-quality harmonic voltage of the missing phase with the nonlinear distortion factor less than 1%.

The described technical result in the invention embodiment is achieved because the energy of the alternating current supplied to the machine stator generates in it the primary rotating magnetic field which induces in its short circuited turns the electric current due to magnetic coupling with the rotor, with the turns made as the pairs of the short-circuited bars spaced apart around the perimeter of the rotor in such pattern that the current flowing from the bars of each pair lying in the area of generating maximum current and, in consequence, providing minimum intensity of magnetic field of the stator and minimum electromechanical interaction with the stator, is directed to the bars of the corresponding pairs with maximum values of the magnetic field of the stator thus creating the conditions for supplementary action of the secondary field of the rotor on the primary field of the stator both in transverse and longitudinal directions by means of first, second and next even harmonics that enhances the efficiency of electromechanical interaction between rotor 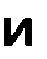 stator to increase the mechanical power transferred to the shaft and maintain the machine operability in case of disconnection of the line voltage phase of the stator.
Fig.1 shows the end view of the first variant of the machine of the claimed invention.
Fig. 2 shows the end view of the second variant of the machine of the claimed invention.
Fig. 3 shows the speed/torque characteristics of the first (b) and second (c) variants of the claimed machine as compared to prototype (a).
Fig. 4 shows the curves of the output (e) and consumed (e') power of the claimed machine as compared to prototype (d), (d').

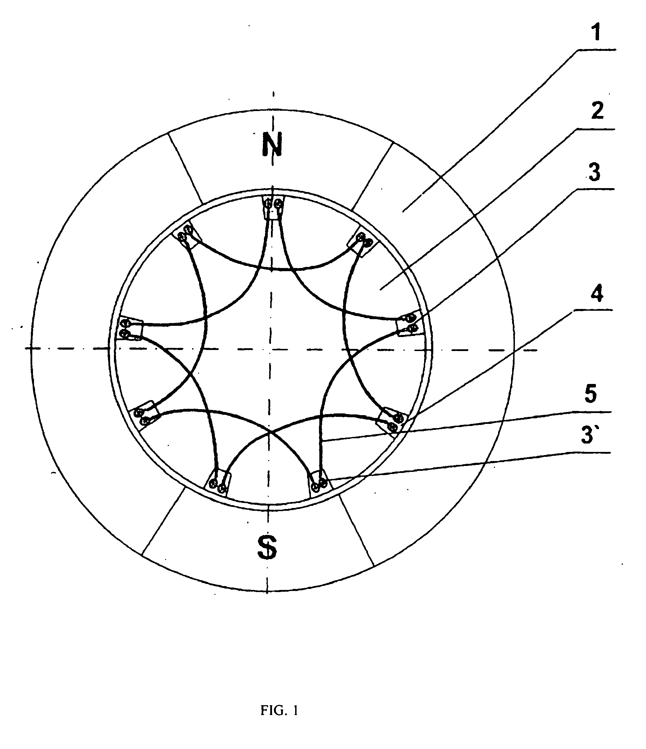

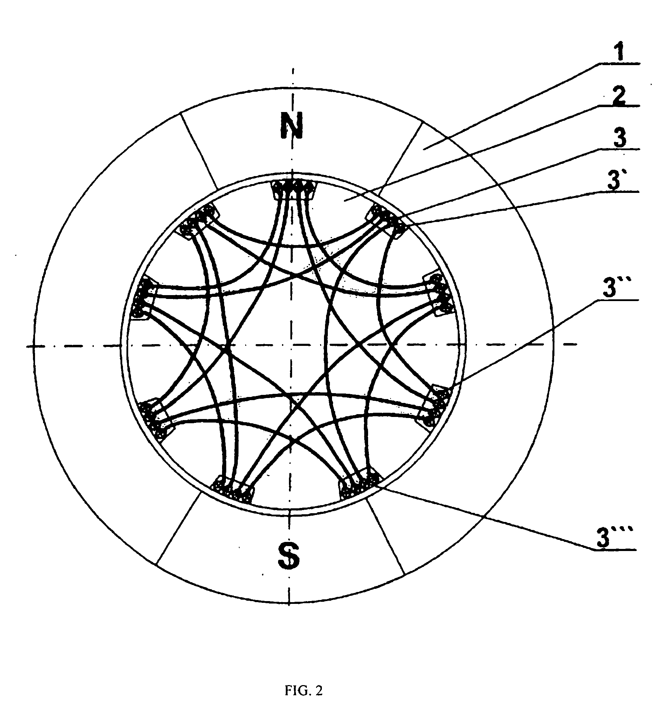

One particular design of machine of the claimed method embodiment represents the asynchronous short-circuited electric machine shown in Fig.1 (number of pole pairs may be varied). The machine comprises, for example, the double-pole stator 1 and rotor 2 with eighteen insulated conductor bars 3-3' of rotor 2 installed in pairs into nine slots 4 (number of rotor bars may be varied), wherein the ends of each bar 3 of one slot are connected with the ends of each corresponding bar 3' of other slot spaced apart along the perimeter of rotor 2 on the distance defined by value which is nearest to the value of half pole pitch of stator 1, to form, in such pattern, the separate short-circuited turns made of two bars 3-3' connected in series. The other design embodiment of the claimed method represents, for example, the asynchronous short-circuited electric machine shown in Fig. 2. The machine comprises the double-pole stator 1 and rotor 2 with thirty six insulated conductor bars 3-3', 3"-3"' of rotor 2 installed in fours into nine slots 4 wherein the ends of each pair of bars 3-3' are connected, respectively, with the ends of bar 3" spaced apart along the perimeter of rotor 2 on the distance defined by value which is nearest to the value of half pole pitch of stator 1 within its limits and with the ends of bar 3'" spaced apart along the perimeter of rotor 2 on the distance defined by value which is nearest to the value of half pole pitch of stator 1 outside its limits. In such pattern the bars 3-3'-3"-3"' of each group are interconnected in the series circuit to form the separate short-circuited turns.

The first variant of design embodiment is applicable for the asynchronous short-circuited electric machines which are used as the general purpose motors with the rigid speed/torque characteristics.

The second variant of design embodiment is applicable for the asynchronous short-circuited electric machines which are used as traction motors with increased starting torque.

The principle of machine operation is as follows:
If the machine is used as the engine, the primary turns of stator 1 are connected to the line voltage network with two (or more) phases shifted relative to each other and alternating with time. In this case the current begins flowing across the windings to create the rotating magnetic field of stator. The magnetic field has the irregular structure determined by the flowing current. In this case the field strength is maximal in the areas of the maximum current and where the current curve passes through the zero value the field is virtually absent. These two areas are separated by distance which value is equal to the half pole pitch. It will be understood that in the area of maximum field strength the curve of primary current has the break and its derivative equals to zero while in the area of minimum field strength the curve passes its zero value and its derivative has the maximum value. Such rotating magnetic field established in the stator pack interacts with the stationary rotor in which the same irregular secondary magnetic field is created during the slip -1. The secondary field induces the secondary current in the short-circuited bars 3 of rotor 2, and these currents establish their own magnetic field. The secondary currents, similarly to the primary currents, have the irregular structure with the shift between maximum and minimum values equal to the half pole pitch. In the areas where the values of primary current and field are maximal, the secondary current and field have the zero values because of zero value of current derivative and flux, and where primary current and the field have the minimum values with maximum value of derivative, the secondary current and field have the maximum values. Since the bars 3 of rotor 2 with maximum value of current are closed to the bars 3 spaced apart by the angle up to half pole pitch or past it with maximum value of field, the current is induced in these bars during the field crossing to create the additional secondary field in the area of maximum primary field. This provides the enhanced electromechanical interaction between rotor 2 and stator 1 without increased starting currents. The starting torque increases with resulting lesser speed-gathering time. It should be noted that the current flows from the active bar 3 to the passive bar very smoothly without any knocks because only one EMF source acts at the maximum current, and in result the work is performed on the first harmonic that reduces the losses in the pack steel. After establishing the electromechanical interaction between rotor 2 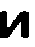 stator 1 the driving torque develops and rotor 2 starts its rotation. The frequency of the secondary field is reduced with increased acceleration and the passive bars 3 begin more and more magnetize the areas of maximum currents of the primary circuit in the longitudinal direction, delivering into it the larger share of the circulating energy which characterizes so-called "reaction of armature", the absorbed current is reduced and, in consequence, the torque is somewhat reduced as well. With the reducing current the steel saturation becomes less, the inductance of windings of rotor 2 and their time constant are increased. In result, the active bars 3 due to speed gathering come nearer and nearer to the areas of stator 1 with the maximum field. And at this point not only passive but active bars 3 begin to release their unused energy into the primary circuit along with the dropping frequency of current in the secondary circuit. In the slip range -0.25...-0.15 the break occurs in the speed/torque characteristic and the machine enters the rated motor operation modes which end by the idle run in the slip range - 0.005...-0.001.

The rotor 2 reaction in the motor operation modes is so efficient while the stator 1 steel is magnetized quite adequately by the secondary circuit in the transverse direction that one phase could be disconnected without loss of operability. In case of one phase disconnection in the rated mode of operation the current in the remaining phases increases proportionally and the machine continue to execute its operation. At that, EMF of the missing phase is generated in the stator winding and the mechanical load on the shaft can be replaced with the electric load on the free phase winding implementing the phase splitting mode in the slip range from -0.15to-0.001.

The autonomous mode of power generation is ensured also by the efficient reaction of rotor 2 when the residual intensity of pack steel magnetization induces some EMF in the primary windings of stator 1 of the rotating machine. If the electric capacitance is connected the to the primary windings, it produces the current of energy exchange between the dissimilar energy stores to excite the machine on the frequency of shaft rotation with some lag and voltage of harmonic shape varied in proportion up to nominal value in the slip range from -0.3 to +0.005. At that, in the slip range + 0.002...+ 0.005 the rated EMF is generated on nominal frequency and at higher frequencies the output frequency and voltage also increase linearly above the rated values.

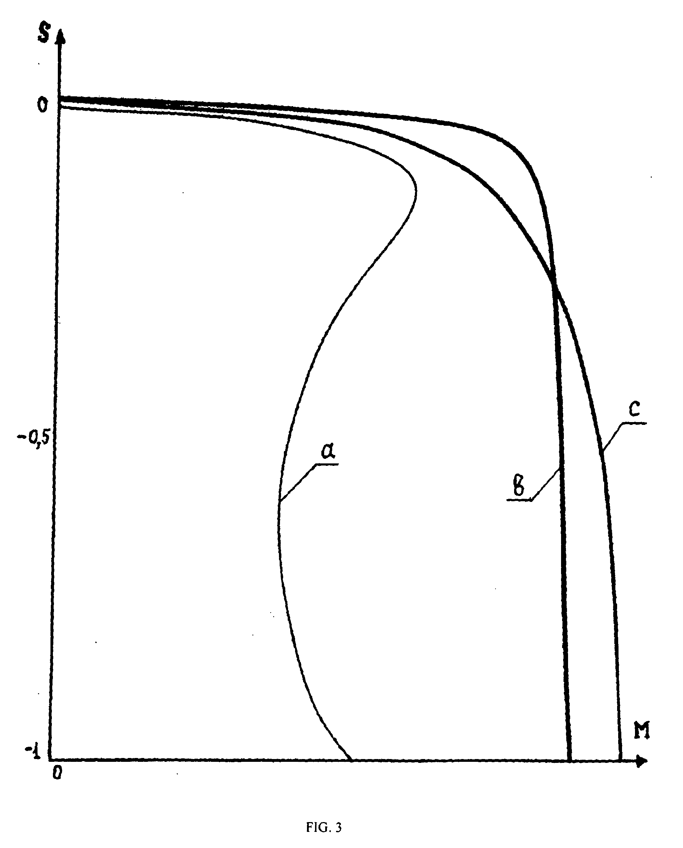

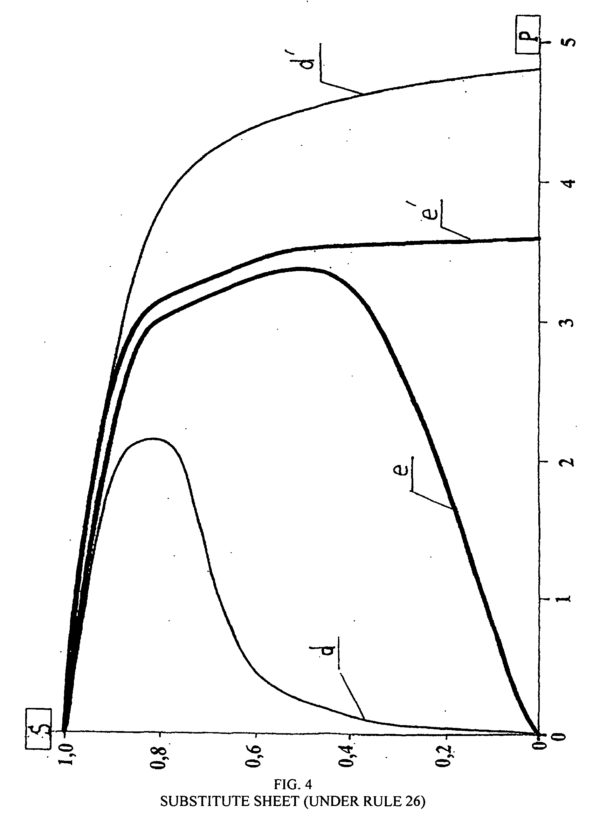

The generator mode with energy release into the circuit is established during the mechanical energy supply to the shaft of machine operating in the motoring conditions and when shaft rotation exceeds the synchronous speed (above "+ 0" of the slip). This mode can be realized in the slip range from +0.001 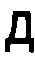 o + 1.17 if allowed by mechanical strength. At that, with the slip increase the torque on the shaft also increases, and after the curve break above the rated conditions there is smooth growth of leading line voltage which is required to maintain the machine in the mode of synchronous operation with the line voltage. The comparative curves of the asynchronous short-circuited electric machine characteristics are presented in Figs. 3 & 4.

## Claims

1. A method for increasing the operating efficiency of an asynchronous squirrel-cage electrical machine, said method comprising an action of the rotating electromagnetic field of the stator on the squirrel-cage windings of the rotor which pass through the areas adjacent to the limits of the stator pole pitch, wherein the rotating electromagnetic field of the stator additionally acts on sections of the squirrel-cage windings of the rotor which pass through the areas adjacent to the limits of half the stator pole pitch .

2. An asynchronous squirrel-cage electrical machine comprising a stator magnetic core with a set of coils and a rotor in the form of a magnetic core with a coil consisting of squirrel-cage windings comprising insulated current-conducting bars arranged in the rotor slots parallel to the axis of rotation of said rotor, wherein each squirrel-cage winding comprises two insulated current-conducting bars which are connected in series and are spaced apart from one another at a distance determined by half the stator pole pitch and are arranged in the rotor slots in the areas adjacent to the corresponding limits thereof.

3. The asynchronous squirrel-cage electrical machine of claim 2, wherein the bars of each squirrel-cage winding are arranged in the rotor slots adjacent to the limits of half the stator pole pitch within said limits.

4. The asynchronous squirrel-cage electrical machine of claim 2, wherein the bars of each squirrel-cage winding are arranged in the rotor slots adjacent to the limits of half the stator pole pitch outside said limits.

5. The asynchronous squirrel-cage electrical machine of claim 2, wherein the bars of each squirrel-cage winding are arranged such that one of said bars is arranged within half the stator pole pitch and the other of said bars is arranged outside of the the stator pole pitch in the rotor slots adjacent to the corresponding limits thereof.

6. An asynchronous squirrel-cage electrical machine comprising a stator magnetic core with a set of coils and a rotor in the form of a magnetic core with a coil consisting of squirrel-cage windings comprising insulated current-conducting bars arranged in the rotor slots parallel to the axis of rotation of said rotor, wherein each winding comprises four bars connected in series, two of said bars being arranged in one rotor slot and two other being arranged in two neighboring rotor slots at a distance from the first slot which is determined by half the stator pole pitch, and said neighboring rotor slots being adjacent from both sides to the limits thereof.
